# EUROPÄISCHE PATENTANMELDUNG

(11) **EP 2 620 256 A1**
(43) Veröffentlichungstag der Anmeldung: **31.07.2013**
(21) Anmeldenummer: 12400030.8
(22) Anmeldetag: 17.07.2012
(51) Int. Cl.: B23Q 17/00

(54) **Werkstückspannvorrichtung mit Sicherheitskomponenten**

(30) Priorität: 18.07.2011 DE 102011107122
(71) Anmelder: HOHENSTEIN Vorrichtungsbau und Spannsysteme GmbH, 09337 Hohenstein-Ernstthal (DE)
(72) Erfinder: Franzki, Michael, 09337 Hohenstein-Ernstthal (DE)
(74) Vertreter: Grosse, Ulrich

(57) **Zusammenfassung**

Alle auf die Werkstückspannung mit einer Vorrichtung (1), die für die Bohr- und Fräsbearbeitung auf der Maschinenpalette (3.7) von Bearbeitungszentren (3) zur Anwendung kommt, zutreffenden Sicherheitsanforderungen, wie die sichere Lagefixierung der Werkstücke (2) sollen, selbsttätig kontrolliert, erfüllbar sein.

Dazu sind an, auf und unter dem einstückigen Aufspannkörper (1.1) elektrische, elektronische und mechanische Sicherheitskomponenten (4) angeordnet. Dabei sind alle Kontaktsensoren (4.1 bis 4.5) über ihre Leitungsführungen (5.1 bis 5.5) zunächst mit einer Elektrosignal-Auswerteeinheit (5.8) und diese über eine Aktivierungssignal-Leitung (5.7) mit der Schutzabdeckung (3.2) und deren Kontaktsensoren (4.6) sowie mit der Maschinensteuerung (3.1) des Bearbeitungszentrums (3) leitungs- und informationsverbunden. Mittels elektrischer Aktivierungssignale an die Maschinensteuerung (3.1) wird eine sichere weitestgehend gefährdungsfreie Bedienertätigkeit gewährleistet.

Das Anwendungsgebiet der Erfindung ist die industrielle Maschinen-und Automobilteile-Fertigung

## Beschreibung

Die Erfindung geht von dem im Oberbegriff des Patentanspruchs 1 beschriebenen Gegenstand aus.

Vorrichtungen werden in DIN 6300: 2009-04 technisch als -Fertigungsmitteldefiniert, die zur Anwendung kommen, um Werkstücke während eines formändernden Fertigungsverfahrens in ihrer Lage zu fixieren. Diese Lagefixierung führt dazu, dass diese Werkstücke wiederholgenau positioniert und fest sowie sicher gespannt sind, während mittels eines Werkzeuges das jeweilige lagefixierte Werkstück auf einer Bearbeitungsmaschine der formändernden Fertigung unterzogen ist. Die Vorrichtung muss ihrerseits dazu auf den Maschinentisch oder der Maschinenpalette lagefixiert sein. Zu den in dieser Norm genannten Arten den der Spannkrafterzeugung gehören u. a. die Hydraulik-Druckölspannung und die Pneumatik-Druckluftspannung, ohne dass die Bewegungsantriebe dafür Bestandteil dieser Vorrichtungen sind. Bestandteil einer Vorrichtung ist beispielsweise ein Hydraulik-Druckzylinder für eine hydraulische Spannkrafterzeugung über eine Kolbenstange und ein schwenkbares Spannelement am Werkstück aber nicht ein Bewegungsantrieb wie ein elektromotorisch angetriebenes Hydraulik-Druckaggregat.

Vorrichtungen sind sicherheitstechnisch und sicherheitsrechtlich als -Technische Arbeitsmittel- definiert. Im Unterschied zur genormten Definition - Fertigungsmittel- ist bei -Technischen Arbeitsmitteln- die technische Ausbildung durch Kriterien der Produktsicherheit gekennzeichnet. Daraus abgeleitet besteht das Ziel, Vorrichtungen mit einem innovativen Sicherheitsdesign auszustatten, um durch realisierte Sicherheitsmaßnahmen und Schutzvorkehrungen, die Bedienersicherheit zu erhöhen und bestehende Restrisiken zu verringern oder gar vollständig auszuschließen.

Die Erfindung hat das Ziel, den Anteil manueller Bedienertätigkeit zu reduzieren und sicherer zu gestalten. Durch den Bediener ständig zu wiederholende Zustandskontrollen über die Anwendungssicherheit beim Umgang mit der Vorrichtung und die Sicherheit der Lagefixierung der Werkstücke in der Vorrichtung vor, während und nach der formändernden Fertigung auf einer Bearbeitungsmaschine sind zeitaufwändig und mit Restrisiken behaftet.

Bezogen auf die auf Vorrichtungen zutreffenden Sicherheitsanforderungen soll der erreichte Sicherheitsstandard beim Sicherheitsdesign dieser Produkte und der Produktanwendungen als Stand der Technik an ausgewählten Beispielen von Erfindungsanmeldungen nachstehend beschrieben werden:

Betroffen sind die Sicherheitsanforderungen
- positionsgenaue feste und sichere Werkstücke - Lagefixierung durch ausreichende und konstant bleibende Werkstücke - Festhaltekräfte:
   DE 10 2011 100 184.4,
   DE 10 2008 052 809 A1 und
   DE 10 2005 020 703 B4, als teilweise Erfüllung mit Werkstück - Kontaktsensoren,
   DE 35 37 337 C2, teilweise Erfüllung mit Kolbenstellungs-Kontaktsensoren,
   DE 33 13 381 C2, DE 32 11 795 C2, DE 297 10 129 U1 und
   DD 251 935 A1, als teilweise Erfüllung mit Drucküberwachung durch sensorische Feststellung der Kolbenstellungen von Druckzylindern und
   Schaltventilen, wobei diese Lösungen leitungs- und informationsverbunden mit der Maschinensteuerung der Bearbeitungsmaschine sind.
- Kompakte und festverbundene, stand- und abkippsicher fixierbare sowie sicher anheb- und transportierbare Aufspannkörper oder Vorrichtungen, insbesondere bei hohen, großen und mit großen Zerspanungskräften, waagerecht gerichtet, bearbeiteten Werkstücken:
- DE 10 2008 052 809 A1, als teilweise Erfüllung durch steife Vierkantspannturm-Ausbildung,
   DE 10 2005 020 703 B4 und
   EP 1 375 058 B1, als teilweise Erfüllung durch steife mit parallelen Rippen abgestützte Winkelausbildungen,
   EP 2 147 749 A1, als Beispiel einer hohen Spannstellen-Anordnung durch einen modularen Aufbau von Distanzelementen, die nur mittels einer in Längssegmente geteilten Befestigungsschraube auf dem Tisch der Bearbeitungsmaschine lagefixiert ist.
   DE 20 2008 015 101 U1 und
   DIN 580: 2003 - 08 kommen als Beispiellösungen für lose oder eingeschraubte Lastaufnahmemittel bei Vorrichtungen, verbunden mit hohen Kontroll- und Sicherungsaufwand durch den Bediener zur Anwendung
- bediener- und prozessfeme Anordnung der Leitungs- und Kabelführungen sowie beweglicher Funktionselemente, insbesondere der bewegten Spannbolzen und Spannelemente der Vorrichtung:
   DE 10 2005 020 703 B
   DE 43 27 632 A1
   EP 1 375 058 B1 und
   DE 88 04 990. 6 U1
      als teilweise Erfüllung, da nur die Schalter, Ventile, Sensoren und Leitungsanschlüsse eingehaust oder abgedeckt sind und die sonstigen Leitungs - und Kabelführungen auf der prozessfernen Seite zwischen den Rippen des jeweiligen Aufspannkörpers der Vorrichtung angeordnet sind.
- Durchführung einer komplexen, aus mechanischen, Medien zu - und abführenden, informatorischen und steuerungswirksamen Einzelfunktionen bestehenden Vorrichtungsanwendung und der Fertigungsabläufe als bedienarme und technisch sichere Systemfunktionen von Vorrichtung und Bearbeitungsmaschine mit einbezogener Maschinensteuerung und Schutzabdeckung:
   DE 10 2011 100 184.4
   DE 10 2005 020 703 B4,
      als teilweise Erfüllung der Informationsverbindung der sensorischen Zustandskontrollen von richtiger Positionierung uns Lagefixierung des Werkstückes mit der Maschinensteuerung
   DE 38 34 650 A1,
      als teilweise Erfüllung, in dem Hand- oder Fingerquetschungen des Bedieners mittels sensorischen Spannkolbenbegrenzung über die Informationsverbindung mit der Maschinensteuerung vermeidbar sind.
   DE 103 05 342 B4 wobei Hand- und Fingerquetschungen durch die Hand des Bedieners selbst über ihre sensorische Erfassung, Auswertung feldelektrischer Eigenschaften und deren kapazitive Änderung mittels spezieller zusätzlicher vorrichtungsabhängiger elektronischer Komponenten verhinderbar sind,
   DE 198 46 371 C2,
   DE 199 33 53 U und
   DE 299 22 233 U1
      an offen und ungeschützt zugängigen, auf Bearbeitungsmaschinen angeordneten, handbetätigten Vorrichtungen sind Hand- und Fingerquetschungen zwischen beweglichen Funktionselementen und Werkstücken nur durch Zweihandhebel-Betätigungen und aufmerksame selbstkontrollierende Bedienertätigkeit auszuschließen.

Diese beispielhaft als Stand der Technik beschriebenen Vorrichtungen und Vorrichtungskomponenten verfügen werkstück- und verfahrensabhängig zum Teil nur über ein differenziert ausgebildetes Sicherheitsdesign. Problematisch sind nachstehend benannte defizitäre konstruktive und strukturielle Ausbildungen, die auf einige der benannten Vorrichtungen und Vorrichtungskomponenten zutreffen. Das sind Ausbildungen
- ohne sensorische Kontrolle des Mediendruckes oder der Werkstück-Festhalttekräfte
- ohne sensorische Kontrolle der Werkstückan- und -auflage sowie der Werkstück-Ge- und Entspannstellung
- ohne sensorisch kontrollierbare Informationsverbindung der ge- oder entspannten Vorrichtung, der geschlossenen oder offenen Schutzabdeckung und der Maschinensteuerung der Bearbeitungsmaschine, über Leitungsführungen vernetzt,
- als kleinflächige; hochragende und modulare Bauweise des Aufspannkörpers der Vorrichtung mit nur wenigen Schrauben in sich verbunden und auf der Maschinenpalette befestigt und
- ohne eine sensorische Kippsicherheitskontrolle,
- eine nur teilweise abgedeckte, abgeschirmte oder abseitige Anordnung von Kabeln und Leitungen
- eine Anwendung kleindimensionierter loser Lastaufnahmemittel wie eingeschraubte Trageösen oder Lastklemmen für schwergewichtige Vorrichtungen

Der im Patentanspruch 1 angegebenen Erfindung liegt deshalb das Problem zu Grunde Vorrichtungen für die Erfüllung aller auf die Werkstückspannung in der industriellen hochproduktiven spanenden Fertigung auf Bearbeitungszentren zutreffenden Sicherheitsanforderungen mit Sicherheitskomponenten auszustatten. Die Zustandskontrollen sollen selbstätig, bedienerunabhängig mit der Schutzabdeckung und mit dem Bearbeitungszentrum steuerungswirksam verbunden durchführbar sein, so dass die Bedienertätigkeit sicher durchführbar ist.

Das Problem wird durch den Patentanspruch 1 gelöst: Die mit Sicherheitskomponenten ausgestattete Vorrichtung besteht im Wesentlichen aus einem einstückigen Aufspannkörper der eine L-,⊥- oder 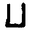 -Querschnittsform hat, die aus einer waagerechten Vorrichtungsplatte und einer Spann-Mittenwand oder aus zwei Außenwänden, senkrecht angeordnet, ausgebildet ist. An, auf und unter dem Aufspannkörper sind elektrische und elektronische, neben mechanisch strukturierten Sicherheitskomponenten angeordnet oder aufgenommen.

Zwischen den als Kontaktsensoren ausgebildeten Sicherheitskomponenten und einer Elektrosignal-Auswerteeinheit sind die Energie- und Informationsleitungen als getrennt verlaufende aber koordinierte Leitungsführungen, in abgedeckten Nuten, in Bohrungen oder in Rohren eingekammert, angeordnet. Von der Elektrosignal-Auswerteeinheit aus wird ein zusammengefasstes Aktivierungssignal durch eine Aktivierungssignal-Leitung an die Kontaktsensoren der Schutzabdeckung und an die Maschinensteuerung ausgesendet.

Mit mindestens zwei, an der Unterseite der Vorrichtungsgrundplatte, sich an deren Enden in Richtung der vom Maschinenwerkzeug realisierten Arbeitsgänge gegenüberliegenden Vorrichtungsauflage-Kontaktsensoren, wird die Tischfläche der Bearbeitungsmaschine mit der des Aufspannkörpers kontaktierend auf eine vollflächige Auflage hin, kontrolliert. Mittels weiterer Leitungsführungen sind mindestens sechs Kontaktsensoren für Werkstückauf- und -anlagekontrolle, die Gespannt-Kontaktsensoren für die Gespannkontrolle, die Entspannt-Kontaktsensoren für die Kontrolle der Entspannstellung der Spannelemente und ein einstell-, kontrollier- und abstellbarer Druckschalter für Medien-Druckkontrolle und damit des Spanndruckes der Spannelemente mit der Elektro-Signaleinheit und über diese mit der Maschinensteuerung informations- und funktionsverbunden. Zwischen den Gespannt-Kontaktsensoren, den Entspannt-Kontaktsensoren, den Kontaktsensoren für die Schutzabdeckung und der Maschinensteuerung der Bearbeitungsmaschine sind sensorische alternative Ja-Nein-Informationsübertragungen durchführbar.

Weitere Ausgestaltungen der Erfindung sind in den Patentansprüchen 2 und 3 angegeben. Sie betreffen die Ausbildung der Spann-Mittenwand oder der Außenwände für eine sichere Anbringung und Verwendung einer Dreieckseilaufhängung und die Ausbildung der Entspannt-Kontaktsensoren.

Die Erfindung ist in zwei Ausführungsbeispielen in den Figuren vereinfacht dargestellt und im folgenden Teil der Beschreibung näher erläutert. Es zeigen
Fig. 1 eine Vorderansicht einer doppelwandigen Vorrichtung für eine gegenüberliegende Zweistück-Spannung mit Sicherheitskomponenten auf der Bearbeitungsmaschine
Fig. 2 eine Vorderansicht einer Vorrichtung mit Spann-Mittenwand und allen Leitungsführungen zwischen den Sicherheitskomponenten auf der Bearbeitungsmaschine
Fig. 3, 4 und 5 eine Teilansicht des Sicherheitsdesigns für Anheben und Transport am Aufspannkörper
Fig. 6 eine Teilansicht eines kippenden Aufspannkörpers

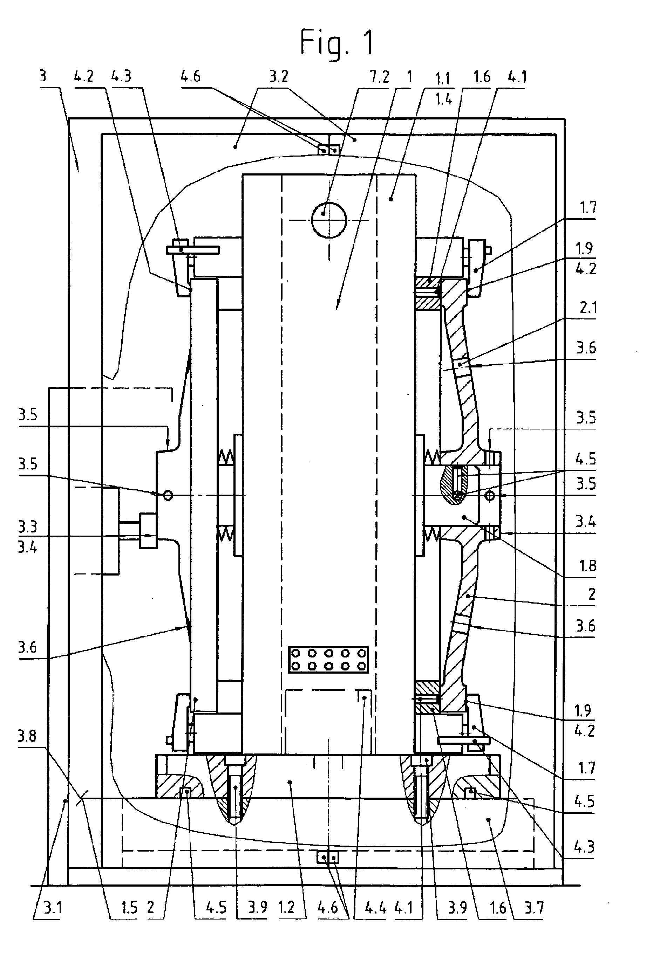

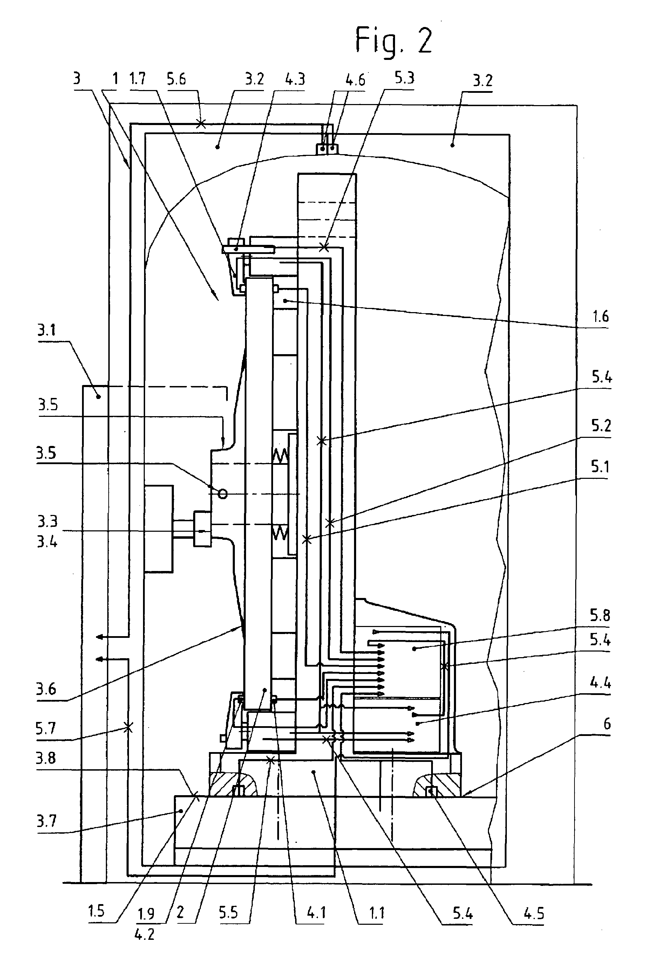

Die in den Fig. 1 und 2 gezeigten mit Sicherheitskomponenten 4.1 bis 4.5 ausgestatteten Vorrichtungen 1 für die Lagefixierung der auf Bearbeitungsmaschinen zu realisierenden Formänderungen an Werkstücken 2 ist beispielhaft eine Spannvorrichtung, auf dessen Aufspannkörper 1.1 radförmig ausgebildete Werkstücke 2 gespannt sind, wobei durch spanende industrielle Bohr- und Fräsbearbeitung in hoher Prozessdynamik mittels waagerecht gerichteter Maschinenwerkzeuge 3.3 auf einem mit einer Schutzabdeckung 3.2 ausgestatteten Bearbeitungszentrum 3 die Arbeitsgänge Fräsen der Nabe 3.4, Bohren der Nabe 3.5 und Bohren der Rondenbohrungen 2.1 als Arbeitsgang 3.6 durchgeführt werden. Die wesentlichste Komponente der Vorrichtung 1 ist der Aufspannkörper 1.1.

Dieser hat wie in Fig. 1 gezeigt, eine ⊥-Querschnittsform, wobei zwei senkrechte Außenwände 1.4 eine Doppelwand bilden, die in einer Mittenstellung auf der waagerechten Vorrichtungsgrundplatte 1.2 aufsitzt. Beidseitig an den senkrechten Flächen der Doppelwand sich gegenüberliegend, sind je ein Werkstück 2 auf Anlageelementen 1.6 fest aufliegend mit der Nabenbohrung in der zentrierenden Bohrungsaufnahme 1.8 aufgenommen und mit dem Nabenteil federnd abgestützt, mittels der schwenkbaren Spannelemente 1.7 gespannt. Der Aufspannkörper 1.1 ist mit mindestens sechs in der Vorrichtungsgrundplatte 2 aufgenommenen Befestigungsschrauben 3.9 auf der Maschinenpalette 3.7 des Bearbeitungszentrums 3 befestigt und um eine senkrechte Mittenachse um 180° schwenkbar.

Der in Fig. 2 gezeigte Aufspannkörper 1.1 hat ebenfalls eine ⊥-Querschnittsform, hier aber mit einer senkrechten Spann-Mittenwand 1.3 ausgebildet. An dieser ist das gleiche Werkstück 2 mit den gleichen Komponenten, wie in Fig. 1, aber nur auf einer Seite positioniert und gespannt. Die andere Seite ist für die Anordnung von Sicherheitskomponenten 4 auf der Vorrichtung 1 genutzt.

In den Fig. 1 und 2 ist das Bearbeitungszentrum 3 sehr vereinfacht dargestellt. Dem Maschinengestell ist die Maschinensteuerung 3.1 zugeordnet. Die zweiteilige Schutzabdeckung 3.2 im Maschinengestell ist vereinfacht im geschlossenen Zustand dargestellt, so dass die Kontaktsensoren für die Schutzabdeckung 4.6 beider Teile oben und unten miteinander kontaktieren. Dargestellt ist die im geschlossenen Zustand der Schutzabdeckung 3.2 stattfindende spanende Fertigung eines am Aufspannkörper positionierten und gespannten Werkstückes 2 mittels eines waagerecht gerichteten Fräswerkzeuges mit dem der Arbeitsgang 3.4 Fräsen der Nabe am Werkstück realisiert wird. Der Maschinentisch ist maschinenspezifisch als Maschinenpalette 3.7 ausgebildet, auf dessen Tischfläche 3.8 der Aufspannkörper 1.1, mit der Unterseite 1.5 seiner Vorrichtungsgrundplatte 1.2 vollflächig kontaktierend, aufliegt und mit den Befestigungsschrauben 3.9 stand- und kippsicher befestigt ist. Diese und andere Schraubverbindungen sind unter den Bedingungen hoher Prozessdynamik und Hochleistungszerspanung anfällig für schwingungsbedingte Lockerungen und erfordern in kurzen Zeitabständen Kontrollaktivitäten des Bedieners.

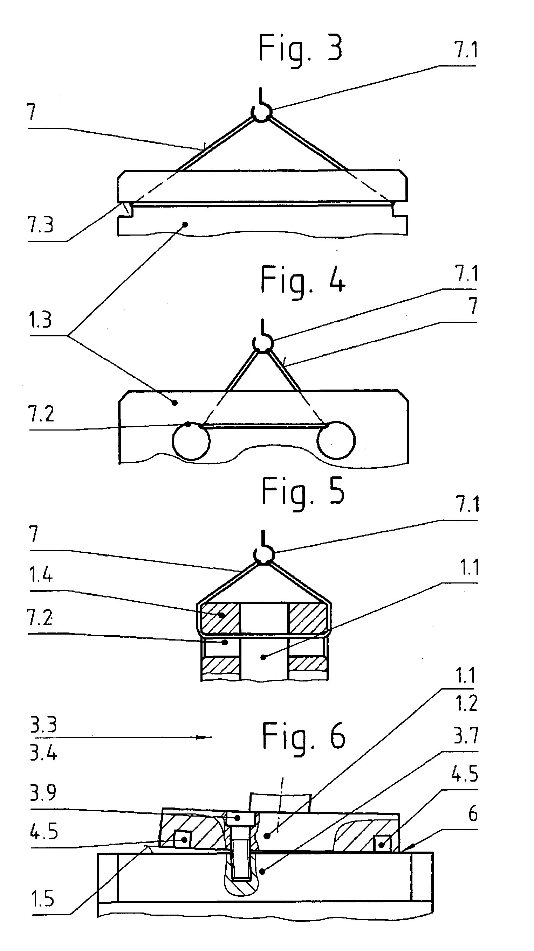

In den Fig. 1 und 2 sind darüber hinaus nachstehende Sicherheitskomponenten 4 der Vorrichtung 1 vereinfacht dargestellt. Das sind im Einzelnen:
- die in den Auflageelementen 1.6 aufgenommenen Kontaktsensoren für Werkstückauf - und - anlagekontrolle 4.1,
- die Gespannt - Kontaktsensoren 4.2, die in der kontrollierten Gespannt - Schwenkstellung jedes schwenkbaren Spannelementes 1.7 über dessen Spannstelle 1.9 das Werkstück 2 kontaktieren.
- die Entspannt - Kontaktsensoren 4.3, die in der kontrollierten Entspannt - Schwenkstellung jedes schwenkbaren Spannelementes 1.7 von diesen wie ein Anschlag kontaktiert werden, wobei sie als induktive Sensoren ausgebildet sind.
- die sensorischen Druckschalter für Mediendruck-Kontrolle 4.4 für die Kontrolle einer durch Ventile begrenzten Größenordnung eines Hydraulikdruckes und damit des vorhandenen Festhalte- bzw. Spanndruckes, mit dem das Spannelement 1.7 an die Spannstelle 1.9 das Werkstück 2 spannt.
- die Vorrichtungsauflage-Kontaktsensoren 4.5 an der Unterseite 1.5 der Vorrichtungsgrundplatte 1.2 des Aufspannkörpers 1.1 für eine kontrollierende Feststellung eines beginnenden Abkippens des Aufspannkörpers 1.2 um die Abkippkante 6 gegenüber der Tischfläche 3.8 der Maschinenpalette 3.7 im Falle sich selbsttätig lösender Befestigungsschrauben 3.9, wie in Fig. 6 dargestellt, und
- die Kontaktsensoren für die Schutzabdeckung 4.6, wobei die beiden Teile der Schutzabdeckung 3.2 geöffnet sind oder im geschlossenen Zustand kontaktierend mit den benannten sensorischen Sicherheitskomponenten 4.1 bis 4.5 der Vorrichtung 1, über die Maschinensteuerung 3.1 des Bearbeitungszentrums 3 koordinierend, informations- und leitungsverbunden sind.

Die Leitungsführungen 5.1 bis 5.6 der Energie- und Informationsleitungen 5 zwischen den sensorischen Sicherheitskomponenten 4.1 bis 4.5 sowie zur Maschinensteuerung 3.1 hin, sind in abgedeckten Nuten sowie in Bohrungen des Aufspannkörpers 1.1 und weiterer Vorrichtungskomponenten sowie im Bearbeitungszentrum 3 eingekammert angeordnet.

Die nachstehend benannten mechanischen Sicherheitskomponenten 4 sind sicherheitsrelevante Ausformungen am Aufspannkörper 1.1:
- eine einstückige Ausbildung der Spann-Mittenwand 1.3 über oder auf der Vorrichtungsgrundplatte 1.2 ist in Fig. 2 dargestellt
- in den oberen Teil der zwei Außenwände 1.4 einer Doppelwand oder der Spann-Mittenwand 1.3 sind, wie in den Fig. 1 und 5 sowie in Fig. 3 dargestellt, je zwei Aufhängebohrungen 7.2 in koordinierter Lage zueinander, für eine Dreieck-Seilzugaufhängung 7 an einem Lasthaken 7.1 eines Hebezeuges angeordnet.
- Alternativ dazu ist in Fig. 4 eine Spann-Mittenwand mit zwei stirnseitigen C - hakenförmigen Ausnehmungen 7.3 für eine Dreieck-Seilzugaufhängung 7 gezeigt.

### Bezugszeichenliste

| | | |
|---|---|---|
| 1. | Vorrichtung | |
| 1.1 | Aufspannkörper | |
| 1.2 | Vorrichtungsgrundplatte | von 1.1 |
| 1.3 | Spann - Mittenwand | von 1.1 |
| 1.4 | Außenwände | von 1.1 |
| 1.5 | Unterseite | von 1.2 |
| 1.6 | Auflageelemente | für 2 |
| 1.7 | (schwenkbare) Spannelemente | |
| 1.8 | zentrierende Bohrungsaufnahme | |
| 1.9 | Spannstellen | von 1.7 und 2 |
| | | |
| 2. | Werkstück(e) | |
| 2.1 | Rondenbohrungen | an 2 |
| | | |
| 3. | Bearbeitungszentrum | |
| 3.1 | Maschinensteuerung | |
| 3.2 | Schutzabdeckung | |
| 3.3 | Maschinenwerkzeug | für 3.4 |
| 3.4 | Arbeitsgang Fräsen der Nabe | |
| 3.5 | Arbeitsgang Bohren der Nabe | |
| 3.6 | Arbeitsgang Bohren der Ronde | |
| 3.7 | Maschinenpalette | |
| 3.8 | Tischfläche | auf 3.7 |
| 3.9 | Befestigungsschrauben | für 1.1 in 3.7 |
| | | |
| 4. | Sicherheitskomponenten | |
| 4.1 | Kontaktsensoren für Werkstück auf- und -anlagekontrolle | |
| 4.2 | Gespannt-Kontaktsensoren | |
| 4.3 | Entspannt-Kontaktsensoren | |
| 4.4 | Druckschalter für Mediendruck-Kontrolle | |
| 4.5 | Vorrichtungsauflage-Kontaktsensoren | |
| 4.6 | Kontaktsensoren für Schutzabdeckung | |
| 5. | Energie - und Informationsleitungen | |
| 5.1. | Leitungsführung | für 4.1 |
| 5.2. | Leitungsführung | für 4.2 |
| 5.3. | Leitungsführung | für 4.3 |
| 5.4. | Leitungsführung | für 4.4 |
| 5.5. | Leitungsführung | für 4.5 |
| 5.6. | Leitungsführung | für 4.6 |
| 5.7. | Aktivierungssignal - Leitung | für 3.1 |
| 5.8. | Elektrosignal - Auswerteeinheit | |
| 6. | Abkipp-Kante | an 1.5 |
| 7. | Dreieck-Seilzugaufhängung | |
| 7.1. | Lasthaken (eines Hebezeuges) | |
| 7.2. | Aufhängebohrungen | für 1 |
| 7.3. | C-hakenförmige Ausnehmungen | an 1.3 |
| | | für 1 |

## Patentansprüche

1. Vorrichtung mit Sicherheitskomponenten, mit denen alle zutreffenden Sicherheitsanforderungen erfüllbar sind, so dass die Werkstückspannung während der spanenden industriellen Bohr- und Fräsbearbeitung von Maschinen- und Automobilteilen auf einem mit der Vorrichtung informations- und leitungsverbundenen Bearbeitungszentrum sicher und mit wenig Bedienertätigkeit realisierbar sowie kontrollierbar ist, **dadurch gekennzeichnet,**
**dass** auf einer waagerechten Vorrichtungsgrundplatte (1.2) eine Spann-Mittenwand (1.3) oder zwei Außenwände (1.4) senkrecht angeordnet, eine L-, ⊥- oder 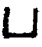 -Querschnittsform eines einstückigen Aufspannkörper (1.1) ausbilden an, auf und unter dem elektrische und elektronische als Kontaktsensoren (4.1 bis 4.5) ausgebildete, neben mechanisch strukturierten, Sicherheitskomponenten (4) angeordnet sind und
**dass** diese Kontaktsensoren (4.1 bis 4.5) über ihre, in abgedeckten Nuten, in Bohrungen oder in Rohren eingekammerten Leitungsführungen (5.1 bis 5.5) für einen Wechselstrom- oder Gleichstromfluss in Kleinspannung zunächst mit einer Elektrosignal-Auswerteeinheit (5.8) und diese über eine Aktivierungssignal-Leitung (5.7) mit allen Kontaktsensoren für Schutzabdeckung (4.6) der Schutzabdeckung (3.2) sowie mit der Maschinensteuerung (3.1) des Bearbeitungszentrum (3), elektrische Aktivierungssignale an die Maschinensteuerung (3.1) aussendend, leitungs- und informationsverbunden sind und
**dass** mit mindestens zwei an der Unterseite (1.5) der Vorrichtungsgrundplatte (1.2), sich an deren Ende in Richtung der vom Maschinenwerkzeug (3.3) des Bearbeitungszentrums realisierten Arbeitsgänge (3.4 bis 3.6) gegenüberliegenden, Vorrichtungsauflage-Kontaktsensoren (4.5) eine Kontaktkontrolle der vollflächigen Vorrichtungsauflage auf der Tischfläche (3.8) der Maschinenpalette (3.7) mit jedem der mindestens sechs Kontaktsensoren für Werkstückauf- undanlagekontrolle (4.1)
mit den Gespannt-Kontaktsensoren (4.2) für die Gespanntkontrolle der schwenkbaren Spannelemente (1.7), an den Spannstellen (1.9) das Werkstück (2) kontaktierend und mit den Entspannt-Kontaktsensoren (4.3) in der Entspannstellung des Werkstückes (2) die weggeschwenkten Spannelemente (1.7) kontaktierend,
über Druckschalter für Mediendruck-Kontrolle (4.4), wobei der Mediendruck als Spanndruck an jeden der eingeschwenkten Spannelemente (1.7) einstell-, kontrollier- und abstellbar ist, und
**dass** zwischen den Gespannt-Kontaktsensoren (4.2), den Entspannt-Kontaktsensoren (4.3), den Kontaktsensoren für Schutzabdeckung (4.6) an der geschlossenen oder offenen Schutzabdeckung (3.2) des Bearbeitungszentrums (3) und der Maschinensteuerung (3.1) des Bearbeitungszentrum (3) alternative vergleichende Soll-Ist-Zustandsinformationen, in der Elektrosignal-Auswerteeinheit (5.8) zu elektrischen Aktivierungssignalen zusammengefasst, feststell- und bedienungsunabhängig über die Maschinensteuerung (3.1) realisierbar sind.

2. Vorrichtung mit Sicherheitskomponenten nach Patentanspruch 1, **dadurch gekennzeichnet,**
**dass** im oberen Teil einer Spann-Mittenwand (1.3), einer doppelwandigen Spannwand oder zweier parallel zueinander positionierten Außenwände (1.4) eines Aufspannkörpers (1.1) je
• zwei Aufhängebohrungen (7.2) oder
• zwei C-hakenförmige, sich stirnseitig gegenüberliegende Ausnehmungen (7.3)
ausgebildet, für eine Dreieck-Seilaufhängung (7) am Lasthaken (7.1) eines Hebezeug anwendbar, angeordnet sind.

3. Vorrichtung mit Sicherheitskomponenten nach Patentanspruch 1, **dadurch gekennzeichnet,**
**dass** die Entspannt-Kontaktsensoren (4.3) an den Spannelementen (1.7) als induktive Sensoren ausgebildet sind.
